# EUROPEAN PATENT SPECIFICATION

(11) **EP 0 339 747 B1**
(45) Date of publication and mention of the grant of the patent: **22.12.1993**
(21) Application number: 89201069.5
(22) Date of filing: 25.04.1989
(51) Int. Cl.: C08L 73/00, C08L 75/04

(54) **Polyketone polymer composition**
Polyketonzusammensetzung
Composition de polycétones

(30) Priority: 28.04.1988 US 187192
(43) Date of publication of application: 02.11.1989
(73) Proprietor: SHELL INTERNATIONALE RESEARCH MAATSCHAPPIJ B.V., 2596 HR Den Haag (NL)
(72) Inventor: Danforth, Richard Louis, Missouri City Texas 77459 (US); Handlin, Dale Lee, Jr., Houston Texas 77077 (US); Gergen, William Peter, Houston Texas 77007 (US); Lutz, Robert Gardiner, Santa Rosa California 95403 (US)

(56) References cited:
- US-A- 2 833 740
- US-A- 3 929 727
- CHEMICAL ABSTRACTS, vol. 101, no. 14, 1st October 1984, page 38, abstract no. 111930b, Columbus, Ohio, US; & JP-A-59 33 345

## Description

This invention is concerned with a polyketone polymer composition and with a process for its preparation.

The general class of polymers of carbon monoxide and one or more ethylenically unsaturated compounds has been known for some years.

More recently, the class of linear alternating polymers of carbon monoxide and at least one ethylenically unsaturated compound has become of greater interest in part because of improved methods for their preparation. These polymers, often referred to as polyketones or polyketone polymers have been shown to be of the repeating formula --CO-(A)-- where A is the moiety of an ethylenically unsaturated compound polymerized through the ethylenic unsaturation. For example, when the ethylenically unsaturated compound is ethene, the polymer will be represented by the repeating formula --CO--(CH₂-CH₂)--. A general process for the production of such polymers is illustrated by European Patent Applications 121,965 and 181,014. This process typically involves a catalyst composition formed from a compound of the Group VIII metals palladium, cobalt or nickel, the anion of a strong non-hydrohalogenic acid having a pKa below 6 and a bidentate ligand of phosphorus, arsenic or antimony.

The resulting polymers are relatively high molecular weight thermoplastics having utility in the production of shaped articles such as containers for the food and drink industry and parts for the automotive industry. For some particular applications it has been found to be desirable to have properties of a polymeric composition which are somewhat different from those of the polyketone polymer. It would be of advantage to retain the more desirable properties of the polyketone polymer and yet improve other properties. In particular, it is desired to provide a composition with a balance of properties which include a unique balance of toughness with stiffness, as well as overall strength and solvent resistance and abrasion resistance.

Blends of uncured polyurethane elastomer (which has been processed in a particular manner) with a polymer improperly called a polyketone, have been taught in U.S. Patent 2,833,740. The specific types of "polyketone"/polyurethane blends disclosed therein were not prepared from a linear alternating ethene/carbon monoxide copolymer. The ratio of ethene to carbon monoxide in the "polyketone" was between 5:1 and 12:1, which implies that ethylene and carbon monoxide units were present in a random distribution and in unequal proportion. The aim of that invention was to provide UV degradability to the polyurethane.

It has now been found that a blend of a polyketone with a polyurethane, provides a composition with the desirable properties mentioned above, wherein, moreover, certain properties are synergistically improved.

Accordingly, the invention relates to a polyketone polymer composition characterized by comprising a blend of a linear alternating polymer of carbon monoxide and at least one ethylenically unsaturated compound with a polyurethane, wherein the weight ratio of the linear alternating polymer to the polyurethane lies between 99:1 and 50:50.

Further, the present invention relates to a process for preparing a polyketone polymer composition of a linear alternating polymer of carbon monoxide and at least one ethylenically unsaturated compound with a polyurethane polymer, wherein the weight ratio of the linear alternating polymer to the polyurethane lies between 99:1 and 50:50, characterized in that it comprises the following steps:
(i) adding a linear alternating polymer of carbon monoxide and at least one ethylenically unsaturated compound to a polyurethane polymer forming a mixture; and
(ii) blending the mixture at temperatures between 175 °C and 300 °C therein forming a polymer composition.

The polyketone polymers which are employed as a component of the blends of the invention are linear alternating polymers of carbon monoxide and at least one ethylenically unsaturated compound. Ethylenically unsaturated compounds suitable for use as precursors of the polyketone polymers have up to 20 carbon atoms inclusive, preferably up to 10 carbon atoms inclusive, and may be aliphatic hydrocarbons such as ethene and other alpha-olefins including propene, butene, isobutene, 1-octene and 1-dodecene, or may be arylaliphatic hydrocarbons containing an aryl substituent on an otherwise aliphatic moiety, particularly an aryl substituent on a carbon atom of the ethylenic unsaturation. Illustrative of this latter class of ethylenically unsaturated hydrocarbons are styrene, p-methylstyrene, p-ethylstyrene and m-methylstyrene. Hetero-atoms containing substituents, e.g. carboxylate groups, are possible. Preferred polyketones are copolymers of carbon monoxide and ethene or terpolymers of carbon monoxide, ethene and a second ethylenically unsaturated hydrocarbon of at least 3 carbon atoms, particularly an alpha-olefin such as propene.

The structure of the polyketone polymer is that of a linear alternating polymer of carbon monoxide and at least one ethylenically unsaturated compound and the polymer will contain substantially one moiety of carbon monoxide for each moiety of unsaturated compound. When terpolymers of carbon monoxide, ethene and a second compound are employed in the blends of the invention there will suitably be within the terpolymer at least two units incorporating a moiety of ethene for each unit incorporating a moiety of the second compound, preferably from 10 units to 100 units incorporating a moiety of ethylene for each unit incorporating a moiety of the second compound. The polymer chain is therefore represented by the formula

--[-CO-(CH₂-CH₂)--]ₓ--[-CO-(B)--]_{y}--

where B is the moiety obtained by polymerization of the second compound through the ethylenic unsaturation. The ---CO-(CH₂-CH₂-)--- units and the --CO-(B)-- units are found randomly throughout the polymer chain and the ratio of y:x is preferably no more than 0.5. In the modification of the invention where copolymers of carbon monoxide and ethylene are employed as a blend component and there is no second compound in the polymer chain, the polymer is represented by the above formula wherein y = 0. If y is other than 0, i.e., terpolymers are employed, ratios of y:x should be preferably from 0.01 to 0.2. The end groups or "caps" of the polymer chain will depend on what materials were present during the preparation of the polyketone polymer and whether and how the polymer was purified. The precise properties of the polymer will not depend to any considerable extent upon the particular end groups so that the polymer is fairly represented by the above formula for the polymer chain.

Of particular interest are those polyketones of high molecular weight from 1,000 to 500,000, especially those of molecular weight over 10,000. The physical properties of the polyketone polymers will depend in part on the molecular weight of the polymer, whether the polymer is a copolymer or a terpolymer and the proportion of the second hydrocarbon present in the case of a terpolymer.

Typical melting points are from 175 °C to 300 °C, more typically from 180 °C to 285 °C. Polyketone polymers usable herein may have melting points of 190-230 °C though polymers with melting points ranging from 230 °C to 270 °C may be usable herein too.

Useful polyketones for the novel blends have limiting viscosity numbers (LVN) as measured by the method wherein the polymer is dissolved in metacresol at 60 °C; using a standard capillary viscosity measuring device, such as a Cannon-Ubbelohde viscometer in the range of 0.5 to 10, preferably 0.8 to 4, and most preferably 0.8 to 2.5 LVN.

Polyurethane polymers usable in the present invention include thermoplastic polyurethanes such as polyester based polyurethanes and polyether based polyurethanes. It has been found that certain commercial polyurethanes, in particular ester based polyurethanes, are useful.

The polyurethane polymers which may be used within the scope of the present invention include those which are prepared from long chain polyols reacted with diisocyanates and chain extenders. Polyols can be of two basic types, either polyester-type or polyether-type. Polyester-type polyols usable herein can be hydroxyl terminated polyesters prepared from adipic acid and an excess of glycol, such as ethylene glycol, neopentyl glycol, hexanediol-1,6 and the like, or mixtures thereof. Polyethers usable herein include poly(oxypropylene) glycols and poly(oxytetramethylene) glycols. For example, polyalkyleneether glycols can be mixed with a molar excess of an organic diisocyanate to form urethane linkages in a linear polymer. This linear polymer can be reacted with a chain extending agent, such as water, diamine, or a hydroxy-amine.

The term "polyalkyleneether glycol" refers to a polyalkyleneether which contains terminal hydroxy groups. These compounds for example, can be derived from the polymerization of cyclic ethers such as alkylene oxides or dioxolane or from the condensation of glycols. They are sometimes known as polyalkylene glycols or polyalkylene oxide glycols. Those useful herein may be represented by the formula HO(RO)ₙH, in which R stands for an alkylene biradical and n is an integer sufficiently large that the molecular weight of the compound is at least 750, i.e. large enough that the polyoxalkylene group --(RO)ₙ-- has a formula weight of at least 732. Not all of the alkylene radicals present need be the same. Glycols containing a mixture of radicals, as in the compound HO(CH₂OC₂H₄O)ₙH can be used. These glycols are either viscous liquids or waxy solids. To be of value in preparing the usable polyurethanes, the molecular weight of the glycol should be at least 750 and may be as high as 10,000. The molecular weight is preferably between 750 and 3,500. Polytetra-methyleneether glycol, is a usable glycol. Polyethyleneether glycol, polypropyleneether glycol and poly-1,2-dimethylethyleneether glycol are representative of other operable glycol compounds.

Additionally, polyether-thioether glycols, polyalkylene-arylene-ether glycols and polyalkylene-arylene-ether glycols are examples of this first class of polyols. Of the second class of polyols usable herein, the polyesters, there are conceptually two classes, poly(oxypropylene) glycols and poly(oxytetramethylene) glycols. As an example, polyalkylene ester glycols can be usable herein.

The term "polyalkyleneester glycol" refers to a polyalkyleneester which contains terminal hydroxy groups and may be represented by the formula

HO(C(O)-RO)ₙH

in which R stands for an alkylene radical and n is an integer sufficiently large that the molecular weight of the compound is at least 750. The moiety RO may be based on the compound ethylene glycol in this ester. 1,4-Butanediol, 1,6-hexanediol, hydroquinone, bis(2-hydroxyethyl) ether, are representative of other operable compounds. The molecular weight of the glycol ester should be at least 750 and may be as high as 10,000. The molecular weight is preferably between 750 and 3500.

Any of a wide variety of diisocyanate compounds may be used in the polymerization to prepare the polyurethane polymer usable herein. Aromatic diisocyanates, such as toluene-2,4-diisocyanate (and its dimers), 4,4′-methylene-bis(phenyl isocyanate), 1,5-naphthylene diisocyanate and 4-tertbutyl m-phenylene diisocyanate are usable herein. Diphenyl methane diisocyanate is particularly advantageous for use herein. Aliphatic compounds such as hexamethylene diisocyanate and tetramethylene diisocyanate, and the alicyclic compounds such as 1,4-cyclohexylene diisocyanate may be used. Of the wide variety of diisocyanates usable herein, including but not limited to: 1,3-bis(3-isocyanato-p-tolyl) urea; 4,4′-methylene di-o-tolylisocyanate; 4-methoxy-m-phenylene diisocyanate; 4-propoxy-m-phenylene diisocyanate; 4-chloro-m-phenylene diisocyante; 4-bromo-m-phenylene diisocyanate; hexamethylene diisocyanate; tetramethylene diisocyanate; and 1,4-cyclohexylene diisocyanate, may be operable herein.

In addition, the following polyisocyanates may be usable:
isophorone diisocyanate, 4,4′-dicyclohexylenemethane diisocyanate, 3,3′-dimethyl-4,4′-bisphenyl diisocyanate, 1,4-benzene diisocyanate, and 1,5-naphthalene diisocyanate.
It is to be understood that these diisocyanates may be used either singly or in combination.

The chain-extending agent can contain a plurality of active hydrogen atoms, with up to two atoms in the molecule having active hydrogen attached thereto. A preferred chain extending agent is 1,4-butanediol. Suitable chain-extending agents include glycols, diamines, dicarboxylic acids, dicarboxamides, disulfonic acids and disulfonamides. Representative compounds include ethylene diamine, m-tolylene diamine, benzidine, diethylene glycol, hydrazine, succinic acid and 1,4-butanedisulfonic acid.

Urethane polymers contemplated as possibly usable herein include conventional reactive urethane polymers. These polymers include multifunctional urethanes prepared from isocyanates.

The polyurethane polymer can be prepared either by mixing all of the ingredients together or by first combining the polyol with the diisocyanate and then reacting the intermediate with a chain extender, either by a batch method or continuously, in a mixing chamber or in an extruder.

The blends described herein form a compound having mechanical integrity.

Suitable blends for the composition of the instant invention can be obtained by blending together a mixture of (a) a polyketone polymer and (b) a polyurethane polymer wherein components (a) and (b) are blended, in relative proportions by weight within a range of from 99:1 to 50:50 parts based on 100 parts of (a) and (b) combined.

A suitable blend based on 100 parts of (a) and (b) combined is prepared from 95 to 50 parts of (a) and, correspondingly, from 5 to 50 parts of (b). Components (a) and (b) are preferably blended in relative proportions ranging from 80:20 to 60:40.

It is to be understood that when herein the amount of the polyurethane polymer or polyketone is expressed in terms of percent by weight, it is meant percent by weight based on the total amount of the blend unless otherwise indicated.

The method of producing the blend of the polyketone polymer and the polyurethane polymer is not material as long as a relatively uniform distribution of the polyurethane polymer through the polyketone is obtained. It is preferred for the blend to have intimate mixing of the polymers, i.e. microscopical distribution of the polyurethane through the polyketone, wherein the size of the dispersed phase particles is no more than 10 microns, preferably 1 micron. In one modification the blend components are extruded and the blend is obtained as the extrudate. In an alternative modification the components are blended in other mixing devices which exhibit high shear, and extruded afterwards, if desired.

Also, one may blend pellets of each polymer in a low shear mixing device such as a drum or tumbler. The blended pellets are then poured into a feeder attached to a screw extruder.

The resulting extruded strand is preferably quenched in water at room temperature, then fed into a chopper to form pellets. The pellets can then be used to make parts, articles, containers, etc. in conventional thermoplastic processing equipment. The extruder can be run at temperatures ranging from 175 °C to 300 °C. A preferred temperature range is 190 °C to 285 °C. The processing conditions will have to be regulated such as by limiting the residence time in order to limit possible polymer degradation and yet achieve intimate mixing of the polymers.

Alternative methods for preparing a blend can be used within the scope of this invention. For example, a masterbatch method can be used to form the unique blend. In a masterbatch process, a first polyketone can be blended, (such as by tumbling) with a polyurethane. This first blend can be blended in the extruder at temperatures of 170 °C to 300 °C, extruded and quenched as described above. The resulting strand can be chopped into blend pellets. These blended pellets can then be mixed with a second polyketone polymer or alternatively, added to additional first polyketone polymer in pellet form. These mixed blend pellets and polyketone polymers can be blended at temperature that range from 170 °C to 300 °C, extruded and quenched as described above.

### EXAMPLES

### A. The polyketone polymer

A linear alternating (ter)polymer of carbon monoxide, ethene and propene (identified as number 087/014) was produced in the presence of a catalyst composition formed from palladium acetate, the anion of trifluoroacetic acid and 1,3-bis[bis(2-methoxyphenyl)phosphino]propane. Two commercial stabilizers were added to the resultant polymer in quantities of 0.5 and 0.27 %w, respectively. The melting point of the polymer was 196 °C and the polymer had a limiting viscosity number (LVN) of 1.68 when measured in m-cresol at 60 °C.

### B. Formulated Blends

Various blends of the polyketone polymer described as 087/014 and polyurethane polymers were produced. In one series of blends, the polyurethane polymer used was a commercial product identified under number 58122, an ester based polyurethane with a Shore A75 and a 198 °C processing temperature. The polyketone polymer and the 58122 polyurethane pellets were mixed together in the desired ratios and passed through a 15 mm twin screw extruder. The extruder temperature was 240 °C operating with undried feed under a nitrogen blanket. The extruder was operated at 300 RPM to produce a residence time of 0.5 minute and the extruded strands were passed directly into water and then chopped to pellets. Blends were made in ratios of polyketone to polyurethane of 80/20, 60/40, 40/60, and 20/80, respectively.

Additional blends were prepared in a manner identical to that described above with three other polyurethanes, identified as numbers 58113, 58881, and 58810, respectively.

### C. Testing

Polyurethane 58133 is an ester based polyurethane having a Shore D55 with a 220 °C processing temperature; polyurethanes 58881 and 58810 are ether-based, and have a Shore A80 and a Shore D42, respectively, both having a processing temperature of 198 °C.

Test specimens for microtensile testing were prepared by drying the formed pellets in a vacuum oven at 40 °C for about 8 hours. Pellets were then compression moulded into plaques between 0.127 and 0.762 mm in thickness at 245 °C for 1½ minutes, using a hydraulic press. Plaques were then cut into specimens for microtensile testing specimens having a dumbbell shape similar to specimens formed using ASTM D1708 test dies. The specimens described above were tested in a so-called Minimaterials Tester made by Polymer Laboratories.

Mechanical testing of these blends used small plates of the various blends and a zero gauge length (ZGL) testing technique. This technique employs a double notched specimen having dimensions of a zero gauge length, e.g. 2.5 mm width between the notches and 0.25 mm thickness produced by compression moulding of the blend. A pneumatic drive was used to separate the ends of the sample at a controlled rate of up to 127 m/minute while a piezoelectric transducer measured deformation or failure of a sample. An environment chamber controlled humidity as well as temperature. ZGL failure times are on the order of 100-500 microseconds. Data obtained by the test can be, and were, used to determine values for impact strength. The results are given in Table I.

Microtensile testing results are presented in Table II for blends of polyketone 087/014 with various polyurethane polymers. Average tensile strength, average modulus and average elongation are shown for the various blends.

**TABLE I**

| Impact Strength (kJ/m²) (average ± standard deviation) | | | | |
|---|---|---|---|---|
| Content (%w) of Polyurethane# | 58122 | 58133 | 58810 | 58881 |
| 100*⁾ | 46.6 ± 6.6 | 129.6 ± 15.5 | 78.7 ± 15.7 | 40.7 ± 7.0 |
| 80*⁾ | 79.6 ± 29.0 | 82.0 ± 40.9 | 84.4 ± 12.4 | 46.5 ± 4.7 |
| 60*⁾ | 23.4 ± 22.0 | 89.6 ± 18.4 | 75.3 ± 20.0 | 76.5 ± 4.0 |
| 40 | 30.3 ± 13.2 | 120.9 ± 36.8 | 86.9 ± 34.8 | 39.6 ± 14.4 |
| 20 | 35.0 ± 1.7 | 78.2 ± 15.4 | 73.2 ± 15.8 | 51.9 ± 17.2 |
| 0*⁾ | 13.7 ± 8.1 | 13.7 ± 8.1 | 13.7 ± 8.1 | 13.7 ± 8.1 |
| Number of measurements | 27 | 25 | 30 | 28 |

| | | | | |
|---|---|---|---|---|
| *⁾ Comparative | | | | |

**TABLE II**

| Polyurethane type# | Content (%w) | Average tensile strength (MPa) | Average modulus (MPa) | Average elongation (%) |
|---|---|---|---|---|
| 58122 | 0*⁾ | 65.87 | 885.75 | 364 |
| | 20 | 59.10 | 622.45 | 387 |
| | 40 | 25.20 | 243.94 | 195 |
| | 60*⁾ | 16.95 | 43.04 | 275 |
| | 80*⁾ | 18.62 | 15.04 | 535 |
| | 100*⁾ | 16.71 | 7.78 | 483 |
| 58133 | 0*⁾ | 65.87 | 885.75 | 364 |
| | 20 | 49.04 | 587.41 | 276 |
| | 40 | 54.92 | 365.63 | 376 |
| | 60*⁾ | 55.07 | 256.97 | 424 |
| | 80*⁾ | 55.81 | 165.96 | 443 |
| | 100*⁾ | 57.30 | 126.54 | 551 |
| 58810 | 0*⁾ | 65.87 | 885.75 | 364 |
| | 20 | 32.04 | 566.49 | 52 |
| | 40 | 29.00 | 335.21 | 168 |
| | 60*⁾ | 25.74 | 145.22 | 283 |
| | 80*⁾ | 29.43 | 74.50 | 439 |
| | 100*⁾ | 27.39 | 45.30 | 536 |
| 58881 | 0*⁾ | 65.87 | 885.75 | 364 |
| | 20 | 29.07 | 463.07 | 66 |
| | 40 | 15.79 | 182.59 | 79 |
| | 60*⁾ | 13.58 | 49.41 | 276 |
| | 80*⁾ | 15.71 | 21.80 | 542 |
| | 100*⁾ | 12.53 | 13.55 | 542 |

| | | | | |
|---|---|---|---|---|
| *⁾ Comparative | | | | |

It may be seen from the tables that the mechanical properties of the blends are improved in a synergistic way. For instance, the impact strength of pure polyketone being 13.66 kJ/m² and that of polyurethane 58881 being 40.74 kJ/m², the impact strength for their blends reaches values of up to 76.46 kJ/m².

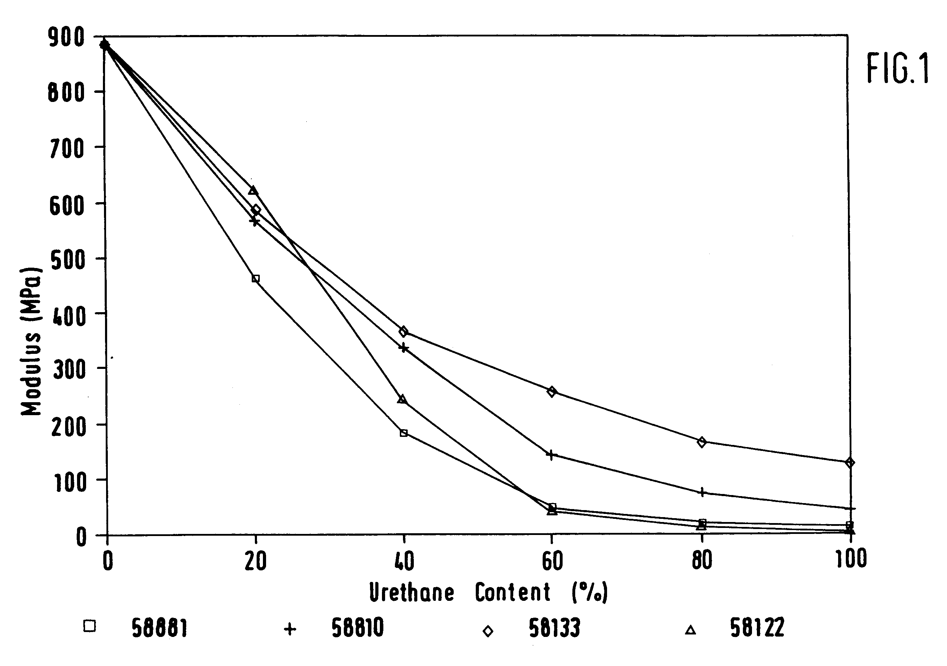

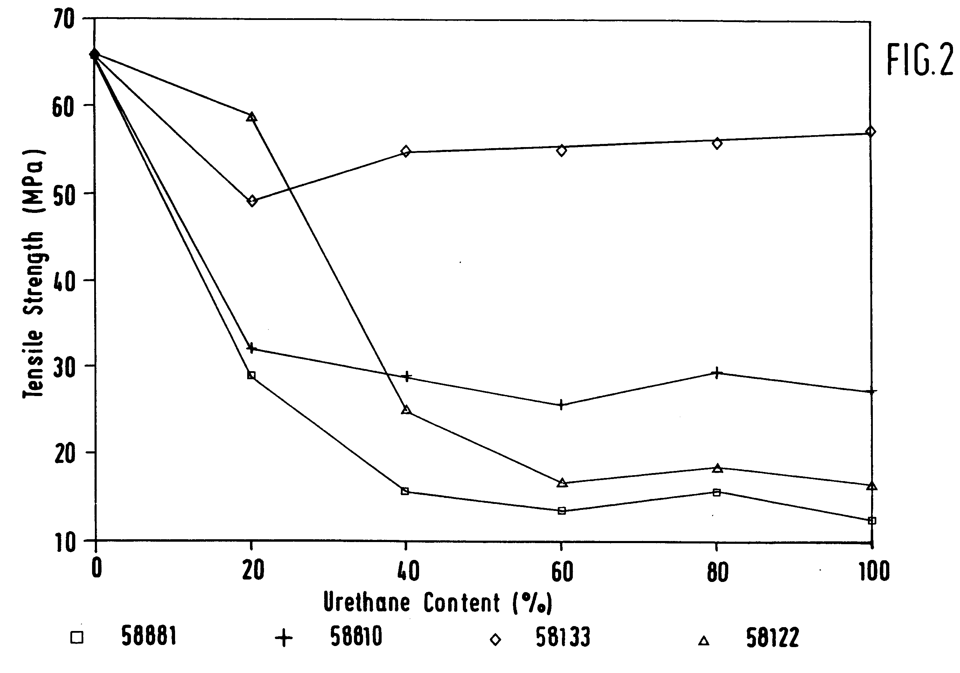

Also one may deduce a synergistic effect from the data for the average modulus, which are summarized in Figure 1. It is evident that especially at levels of 20-60 %w of polyurethane, the decrease in modulus is much stronger than can be explained by a purely additive effect, i.e. a straight line. The same conclusion may be drawn from Figure 2, showing the average tensile strength data.

## Claims

1. Polyketone polymer composition characterized by comprising a blend of a linear alternating polymer of carbon monoxide and at least one ethylenically unsaturated compound with a polyurethane polymer, wherein the weight ratio of the linear alternating polymer to the polyurethane polymer lies between 99:1 and 50:50.

2. A composition as claimed in claim 1, characterized in that the linear alternating polymer is of the formula
--[-CO-(CH₂-CH₂)--]ₓ--[-CO-(B)--]_{y}--
wherein B is the moiety of an ethylenically unsaturated hydrocarbon of at least 3 carbon atoms polymerized through its ethylenic unsaturation, and the ratio of y:x is no more than 0.5.

3. A composition as claimed in claim 2, characterized in that B represents a propylene group, and the ratio of y:x is from 0.01 to 0.2.

4. A composition as claimed in claim 2, characterized in that y = 0.

5. A composition as claimed in any of claims 1-4, characterized in that the polyurethane polymer has been prepared either from polyalkylene ester glycols in the presence of diisocyanates then reacted with chain extending agents, or from polyalkylene ether glycols in the presence of diisocyanates, then reacted with chain extending agents.

6. A composition as claimed in any of claims 1-5, characterized in that the weight ratio lies between 95:5 and 50:50.

7. A composition as claimed in claim 6, characterized in that the weight ratio lies between 80:20 and 60:40.

8. Process for preparing a polyketone polymer composition according to any of claims 1-7, characterized in that it comprises the following steps:
(i) adding a linear alternating polymer of carbon monoxide and at least one ethylenically unsaturated compound to a polyurethane polymer forming a mixture; and
(ii) blending the mixture at temperatures between 175 °C and 300 °C therein forming a polymer composition.

9. A process as claimed in claim 8, characterized in that the blending is performed at temperatures between 190 °C and 285 °C.

## Patentansprüche

1. Polyketonpolymerzusammensetzung,
**dadurch gekennzeichnet,**
daß sie ein Gemisch eines linearen alternierenden Polymers von Kohlenstoffmonoxid und mindestens einer ethylenisch ungesättigten Verbindung mit einem Polyurethanpolymer umfasst, wobei das Gewichtsverhältnis von linearem alternierendem Polymer zum Polyurethanpolymer zwischen 99:1 und 50:50 liegt.

2. Eine Zusammensetzung wie in Anspruch 1 beansprucht, dadurch gekennzeichnet, daß das lineare alternierende Polymer die Formel
--[-CO-(CH₂-CH₂)--]ₓ--[-CO-(B)--]_{y}--
aufweist, in der B der Teil eines ethylenisch ungesättigten Kohlenwasserstoffs mit mindestens 3 Kohlenstoffatomen, der durch seine ethylenische Ungesättigtheit polymerisiert ist, und wobei das Verhältnis von y:x nicht mehr als 0,5 ist.

3. Eine Zusammensetzung wie in Anspruch 2 beansprucht, dadurch gekennzeichnet, daß B eine Propylengruppe darstellt und das Verhältnis von y:x von 0,01 bis 0,2 beträgt.

4. Eine Zusammensetzung wie in Anspruch 2 beansprucht, dadurch gekennzeichnet, daß y=0 ist.

5. Eine Zusammensetzung wie in irgendeinem der Anspruche 1-4 beansprucht, dadurch gekennzeichnet, daß das Polyurethanpolymer entweder aus Polyalkylenesterglycolen in Gegenwart von Diisocyanaten mit anschließender Umsetzung mit Kettenverlängerungsmitteln oder aus Polyalkylenetherglycolen in Gegenwart von Diisocyanaten mit anschließender Umsetzung mit Kettenverlängerungsmitteln hergestellt worden ist.

6. Eine Zusammensetzung wie in irgendeinem der Ansprüche 1-5 beansprucht, dadurch gekennzeichnet, daß das Gewichtsverhältnis zwischen 95:5 und 50:50 liegt.

7. Eine Zusammensetzung wie in Anspruch 6 beansprucht, dadurch gekennzeichnet, daß das Gewichtsverhältnis zwischen 80:20 und 60:40 liegt.

8. Verfahren zur Herstellung einer Polyketonpolymerzusammensetzung nach irgendeinem der Ansprüche 1-7, dadurch gekennzeichnet, daß es die folgenden Stufen umfaßt:
(i) Zufügen eines linearen alternierenden Polymers von Kohlenmonoxid und mindestens einer ethylenisch ungesättigten Verbindung zu einem Polyurethanpolymer unter Bildung eines Gemischs und
(ii) Vermischen des Gemischs bei Temperaturen zwischen 175 °C und 300 °C unter Bildung einer Polymerzusammensetzung darin.

9. Ein Verfahren wie in Anspruch 8 beansprucht, dadurch gekennzeichnet, daß das Vermischen bei Temperaturen zwischen 190 °C und 285 °C ausgeführt wird.

## Revendications

1. Composition de polymères de polycétone caractérisée en ce qu'elle comprend un mélange de polymère alternant linéaire de monoxyde de carbone et d'au moins un composé éthyléniquement insaturé avec un polymère de polyuréthanne, dans laquelle le rapport pondéral du polymère alternant linéaire au polymère de polyuréthanne est compris entre 99:1 et 50:50.

2. Composition selon la revendication 1, caractérisée en ce que le polymère alternant linéaire est de formule
--[-CO-(CH₂-CH₂)--]ₓ--[-CO-(B)--]_{y}--
dans laquelle B est la fraction d'un hydrocarbure éthyléniquement insaturé d'au moins 3 atomes de carbone polymérisés par l'intermédiaire de son insaturation éthylénique, et le rapport y:x ne dépasse pas 0,5.

3. Composition selon la revendication 2, caractérisée en ce que B représente un groupe propylène, et le rapport de y:x est de 0,01 à 0,2.

4. Composition selon la revendication 2, caractérisée en ce que y = 0.

5. Composition selon l'une quelconque des revendications 1 à 4, caractérisée en ce que les polymères de polyuréthanne ont été préparés soit à partir de polyalkylèneesterglycols en présence de diisocyanates ensuite mis à réagir avec des agents d'extension de chaîne, soit à partir de polyalkylèneétherglycols en présence de diisocyanates, ensuite mis à réagir avec des agents d'extension de chaîne.

6. Composition selon l'une quelconque des revendications 1 à 5, caractérisée en ce que le rapport pondéral est compris entre 95:5 et 50:50.

7. Composition selon la revendication 6, caractérisée en ce que le rapport pondéral est compris entre 80:20 et 60:40.

8. Procédé pour préparer une composition de polymères de polycétone selon l'une quelconque des revendications 1 à 7, caractérisé en ce qu'il comprend les étapes suivantes consistant:
(i) à ajouter un polymère alternant linéaire de monoxyde de carbone et d'au moins un composé éthyléniquement insaturé à un polymère de polyuréthanne formant un mélange; et
(ii) à mélanger le mélange à des températures comprises entre 175°C et 300°C formant une composition polymère.

9. Procédé selon la revendication 8, caractérisé en ce que le mélange est réalisé à des températures comprises entre 190°C et 285°C.
